# EUROPÄISCHE PATENTANMELDUNG

(11) **EP 1 134 725 A1**
(43) Veröffentlichungstag der Anmeldung: **19.09.2001**
(21) Anmeldenummer: 00105465.9
(22) Anmeldetag: 15.03.2000
(51) Int. Cl.: G10L 15/06

(54) **Anpassung automatischer Spracherkennungssysteme an spezifische Charakteristika von einzelnen Sprechergruppen zur Verbesserung der Erkennungsleistung**

(71) Anmelder: SIEMENS AKTIENGESELLSCHAFT, 80333 München (DE)
(72) Erfinder: Niedermair, Gerhard, 85256 Vierkirchen (DE)

(57) **Zusammenfassung**

Die vorliegende Erfindung betrifft ein Spracherkennungssystem mit einer Verarbeitungsvorrichtung (2) mit einem ersten und einem zweiten phonembasierten Sprachmodell (3a, 3b) zum sprecherunabhängigen Erkennen und Verarbeiten von Sprachäußerungen eines Anwenders in einer Sprache und ein in diesem Spracherkennungssystem angewendetes Verfahren zur sprecherunabhängigen Spracherkennung.

Im weiteren betrifft die vorliegende Erfindung eine Vorrichtung (4) zum Erzeugen von Sprachmodellen (3a, 3b) zur sprecherunabhängigen Erkennung von Sprachäußerungen einer Sprache und ein in dieser Vorrichtung (4) angewendetes Verfahren zum Erzeugen von Sprachmodellen (3a, 3b).

## Beschreibung

Die vorliegende Erfindung betrifft ein sprecherunabhängiges Spracherkennungsystem, wie es im Oberbegriff des beigefügten Anspruches 1 beschrieben ist, und ein in diesem Spracherkennungssystem angewendetes Verfahren zur sprecherunabhängigen Spracherkennung, wie es im Oberbegriff des beigefügten Anspruches 5 beschrieben ist.

Im weiteren betrifft die vorliegende Erfindung eine Vorrichtung zum Erzeugen von phonembasierten Sprachmodellen, wie sie im Oberbegriff des beigefügten Anspruches 9 beschrieben ist, und ein in dieser Vorrichtung angewendetes Verfahren zum Erzeugen von phonembasierten Sprachmodellen, wie es im Oberbegriff des beigefügten Anspruches 12 beschrieben ist.

Unter sprecherunabhängigen Spracherkennungssystemen versteht man Spracherkennungssysteme, deren einzelne Anwender nicht explizit mit diesem System trainiert haben, das heißt deren einzelne Anwender keine eigenen Sprachproben zur Spracherkennung hinterlegt haben. Solche Systeme finden z. B. Anwendung bei Telefonauskünften, bei Banken und für Buchungssysteme. Der Anwender nimmt dabei in der Regel per Telefon mit der gewünschten Anwendung (z. B. mit seiner Bank) Kontakt auf, um z. B. seinen Kontostand abzufragen oder eine Überweisung zu veranlassen.

Solche sprecherunabhängigen Spracherkennungssysteme arbeiten meist mit phonembasierten (= lautbasierte) Sprachmodellen, anhand derer die Spracherkennung vorgenommen wird. Diesen akustischen Modellen liegt das Trainingsmaterial, d. h. die Sprachproben mit dem Laut- und Sprachcharakteristika, von beispielsweise mehreren tausend repräsentativen Sprechern zugrunde. Das so gesammelte Sprachmaterial deckt dabei in der Regel mehr oder weniger gut die Aussprachevarianten, das heißt die akustischen Realisierungsvarianten, der Anwender des Spracherkennungssystems ab.

Dabei tritt allerdings das Problem auf, daß durch die notwendige Verallgemeinerung der Charakteristika eines Lautes die im Sprachmodell abgelegten akustischen Parameter für diesen Laut nur in Näherung mit den Parametern des selben Lautes bei einem Anwender, den ein Spracherkennungssystem erkennen soll, übereinstimmen. Die Folge davon sind falsche Zuordnungen der eingegebenen Sprachäußerungen des Anwenders zu denen der abgespeicherten Lauteinheiten, was zu gehäuften Fehlerkennungen führen kann. Das heißt, je besser die im Sprachmodell abgespeicherten Parameter der Laute auf die Spracheingaben des Anwenders passen, um so besser ist die Zuordnung der Spracheingaben zu den Lauteinheiten, und damit die Erkennungsrate von Spracherkennungssystemen.

Beim Stand der Technik wird bei der Bildung des phonembasierten Sprachmodelles darauf geachtet, daß zur Bildung des Sprachmodelles möglichst statistisch repräsentative und ausgewogene Daten bzw. Sprachproben gesammelt werden, indem man die aufgenommenen Sprecher statistisch repräsentativ auswählt.

Weiterhin nimmt man die Sprachproben von möglichst vielen Sprechern in das Sprachmodell bzw. die Datenbank, aus der das Sprachmodell gewonnen wird, auf. Damit wird erreicht, daß möglichst viele akustische Realisierungen eines Lautes erfaßt werden, um eine möglichst hohe Erkennungsrate zu erzielen.

Durch die Erhöhung der Anzahl der repräsentativen Sprecher, deren Sprache als Grundlage zur Bildung des Sprachmodells dient, ist die Varianz, das heißt die Bandbreite, mit der ein Laut erkannt wird, des Sprachmodells entsprechend hoch. Dadurch wird auf der einen Seite erreicht, daß die Sprachäußerungen von möglichst vielen Anwendern erkannt werden, auf der anderen Seite steigt jedoch auch die Anzahl der Fehlerkennungen. Eine Erhöhung der Auswahl der repräsentativen Sprecher eines Sprachmodells zieht ebenfalls einen erhöhten Rechenaufwand beim Erkennungsvorgang nach sich.

Um die geschilderten Probleme zu lösen, werden beim Stand der Technik nach voreingestellten Kriterien (z. B. männlichweiblich) die repräsentativen Sprecher in Gruppen unterteilt. Für diese Gruppen werden dann, wie oben beschrieben, mehrere Sprachmodelle erzeugt. In der jeweiligen Anwendung wird dann bei der Spracherkennung, z. B. algorithmisch oder durch Abfrage, die Gruppenzugehörigkeit des jeweiligen Anwenders festgestellt und das entsprechende Sprachmodell für die Spracherkennung ausgewählt.

Mit einer derartigen Unterteilung nach solchen a priori Kriterien wird eine Verbesserung der Erkennungsrate der Spracherkennung erreicht. Die Varianz des Sprachmodelles wird bei diesem Verfahren jedoch nicht optimal verringert, da z. B. ein männlicher und ein weiblicher Anwender eine ähnlichere Sprachcharakteristik haben können, als zwei weibliche Anwender.

Die Aufgabe der vorliegenden Erfindung ist somit, ein Spracherkennungssystem und ein in diesem Spracherkennungssystem angewendetes Verfahren bereitzustellen, bei denen eine Verbesserung der Erkennungsrate bei gleichzeitiger Reduzierung der Fehlerkennungen ermöglicht wird.

Diese Aufgabe wird durch ein Spracherkennungssystem gemäß dem beigefügten Anspruch 1 und ein in diesem Spracherkennungssystem angewendetes Verfahren gemäß dem beigefügten Anspruch 5 gelöst.

Weiterhin ist die Aufgabe der vorliegenden Erfindung, eine Vorrichtung und ein in dieser Vorrichtung angewendetes Verfahren zum Erzeugen von Sprachmodellen bereitzustellen, die als Basis zur Spracherkennung dienen.

Diese Aufgabe wird durch eine Vorrichtung gemäß dem beigefügten Anspruch 9 und ein in dieser Vorrichtung angewendetes Verfahren gemäß dem beigefügten Anspruch 12 gelöst.

Gemäß der vorliegenden Erfindung stehen dem Spracherkennungssystem mindestens zwei Sprachmodelle zur Verfügung, aufgrund derer die Erkennung der Spracheingaben eines Anwenders erfolgt. In den jeweiligen Sprachmodellen sind dabei die akustischen Parameter, das heißt die Lauteinheiten und dazugehörigen Parameter, enthalten, die jeweils ähnliche Charakteristika aufweisen.

Diese Sprachmodelle werden dabei gebildet, indem aus einer oder mehreren Datenbanken, die die Sprachproben (Trainingsmaterial) und somit die Lauteinheiten von einer Vielzahl von Sprechern enthalten, diejenigen Sprachproben bzw. Lauteinheiten jeweils zu einem Sprachmodell zusammengefaßt werden, die möglichst ähnliche akustische Charakteristik aufweisen. Die Charakteristika einer Lauteinheit kann dabei z. B. nach spektralen Eigenschaften bestimmt werden.

Durch die Aufteilung der Sprachmodelle wird zum einen erreicht, daß eine große Anzahl von repräsentativen Sprechern in einem Spracherkennungssystem zur Verfügung stehen und somit eine hohe Erkennungsrate erzielt wird. Zum anderen wird die Anzahl der Fehlerkennungen reduziert, da bei der Spracherkennung ein Sprachmodell ausgewählt wird, dessen akustische Charakeristika der enthaltenen Lauteinheiten dem jeweiligen Anwender am nächsten kommt.

Vorteilhafte Ausgestaltungen der vorliegenden Erfindung sind in den Unteransprüchen 2 bis 4, 6 bis 8, 10, 11, 13 und 14 wiedergegeben.

In dem Spracherkennungssystem können zur Spracherkennung auch mehr als zwei Sprachmodelle zur Anwendung kommen. Die Anzahl und Größe der tatsächlich verwendeten Sprachmodelle ist dabei von der Rechnerleistung, vom zur Verfügung stehenden Speicher und der erforderlichen Erkennungsgenauigkeit abhängig.

Im Verlauf der Spracherkennung eines Anwenders kann das jeweilige Sprachmodell, das der aktuellen Spracherkennung zugrunde liegt, automatisch gewechselt werden, wenn sich herausstellt, daß ein anderes Sprachmodell zur Spracherkennung dieses speziellen Anwenders besser geeignet ist, als das aktuell verwendete.

Die einzelnen Sprachmodelle können als Untermodelle Bestandteil eines Gesamtsprachmodelles sein. Die Spracherkennung eines Anwenders erfolgt dann, wie oben beschrieben, anhand eines für den jeweiligen Anwender am besten geeigneten Untermodelles.

Die vorliegende Erfindung wird nachfolgend anhand eines bevorzugten Ausführungsbeispiels unter Bezug auf die beigefügten Zeichnungen näher erläutert, in denen zeigen:
Fig. 1 den schematischen Aufbau des erfindungsgemäßen Spracherkennungssystems;

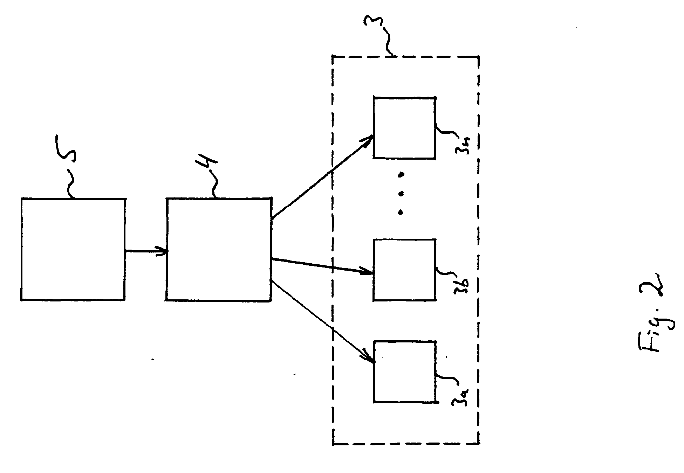

Fig. 2 den schematischen Aufbau der erfindungsgemäßen Vorrichtung zum Erzeugen der Sprachmodelle.

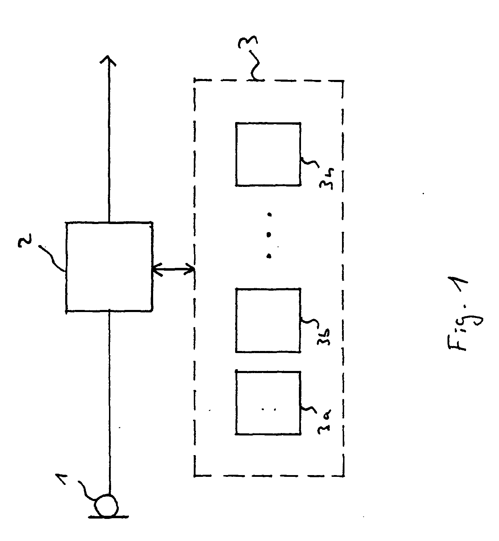

Wie aus Fig. 1 ersichtlich ist, besteht das erfindungsgemäße Spracherkennungssystem aus einer Eingabevorrichtung 1 zur Eingabe von Sprachäußerungen eines Anwenders, eine Verarbeitungsvorrichtung 2 zum Verarbeiten der Sprachäußerungen und zur Ausgabe des Ergebnisses der Spracherkennung und den einzelnen Sprachmodellen 3a .. 3n, die auch jeweils Teil eines Gesamtsprachmodelles 3 sein können. Diese Sprachmodelle 3a ... 3n bzw. das Gesamtsprachmodell 3 sind dabei im Spracherkennungssystem gespeichert.

Die Eingabevorrichtung 1 ist in Fig. 1 als Mikrophon dargestellt. Sie kann z. B. das Mikrophon eines Telefons sein, über das der Anwender im Spracherkennungssystem kommuniziert.

Die einzelnen Sprachmodelle 3a ... 3n werden durch die Vorrichtung 4 erzeugt. Dabei werden aus einer Datenbank 5, die eine breite Sprachdatensammlung (Trainingsmaterial) von einer Vielzahl von repräsentativen Sprechern enthält, die Sprachmodelle 3a ... 3n bzw. das Gesamtsprachmodell 3 erzeugt.

Die Sprachmodelle 3a .. 3n werden durch die Vorrichtung 4 erzeugt, indem jeweils die Sprachproben bzw. Lauteinheiten zusammengefaßt werden, die möglichst ähnliche akustische Charakteristika aufweisen. Diese Charakteristika können z. B. die spektralen Eigenschaften der Sprachproben bzw. Lauteinheiten sein.

Akustische Modelle in phonembasierten Spracherkennungssystemen enthalten ein endliches Inventar von Lautmodellen der in der gewählten Sprachen unterscheidbaren Laute (Phoneme) bzw. Lauteinheiten. Jedes dieser Lautmodelle setzt sich aus einer Anzahl von Prototypen zusammen, welche die typischen akustischen (meist spektralen) Eigenschaften dieses Lautes modellhaft widerspiegeln.

Gemäß der vorliegenden Erfindung wird die im Lautmodell (d. h. der Lauteinheit innerhalb des Sprachmodelles) auftretende Varianz der akustischen Parameter dadurch verringert, indem je nach einer phonetisch/akustischen bzw. spektralen Charakteristik (und nicht nach einer ä priori Charakteristik, wie z. B. männlich-weiblich, alt-jung) die phonetischen Realisierungen eines Lautes oder einer Lautgruppe oder von Lautinventaren auf verschiedenen akustische Sprachmodelle aufgeteilt werden.

Bei der vorliegenden Erfindung werden die Lautinventare (d. h. die Ansammlung der Lauteinheiten) von vorher nicht spezifizierten Sprechern aus der Datenbank mit dem Trainingsmaterial in einem Sprachmodell zusammengefaßt, die sich hinsichtlich vorher gewählter akustischer Modellparameter möglichst ähnlich sind. Dadurch wird die Trennschärfe zwischen den einzelnen Lautmodellen eines Lautinventars sehr viel präziser und damit die Erkennungsgenauigkeit verbessert.

Die Differenzierung der einzelnen Sprachmodelle findet nicht z. B. durch Dialektale, altersmäßige oder geschlechtliche Unterschiede statt. Entscheidend für die Zusammenfassung einzelner Lauteinheiten in einem Sprachmodell ist die möglichst geringe Abweichung der gemessenen akustischen Charakteristika der Realisierungsvarianten eines Lautes untereinander. Das entscheidende Kriterium im Sprachmodell ist die möglichst geringe statistische Varianz der Lauteinheiten innerhalb eines Sprachmodelles.

Bei der Bildung eines Sprachmodelles ist darauf zu achten, daß die von einem bestimmten Sprecher gewonnenen Lauteinheiten bzw. Prototypen nach Möglichkeit nicht über verschiedene Sprachmodelle verteilt sind, da sonst die für eine Sprechergruppe typischen artikulatorischen Eigenschaften innerhalb des gesamten Lautinventars verlorengehen.

Das Verfahren zum Erzeugen von Sprachmodellen enthält somit Algorithmen, die sowohl dafür sorgen, daß statistisch möglichst wenig voneinander abweichende Lauteinheiten innerhalb eines Sprachmodelles enthalten sind, also auch gleichzeitig dafür sorgen, daß die verschiedenen Lauteinheiten eines Sprechers soweit wie möglich innerhalb eines einzigen akustischen Sprachmodelles modelliert werden.

Die Anzahl der maximal zu erzeugenden Sprachmodelle kann dabei vom Algorithmus zur Bildung der Sprachmodelle vorgegeben werden. Die einzelnen erzeugten Sprachmodelle können dabei jeweils Bestandteil eines Gesamtsprachmodelles sein. Die Abweichung der Summe der akustischen Eigenschaften einer Lauteinheit von einer anderen wird durch ein geeignetes Abstandsmaß definiert.

Im praktischen Einsatz des Spracherkennungssystem wird anhand der ersten Äußerung des Anwenders das Sprachmodell ausgewählt, das der Sprachcharakteristik dieses Anwenders am nächsten kommt. Das ausgewählte Sprachmodell wird dann für den weiteren Verlauf der Spracherkennung des Anwenders herangezogen. Die Entscheidung, ob das richtige Sprachmodell zur Spracherkennung dieses Anwenders herangezogen wurde, kann im weiteren Verlauf des Anwendungsdialoges mehrmals auf ihre Richtigkeit hin überprüft werden. Insbesondere dann, wenn im Anwendungsdialog gehäuft Fehlerkennungen auftreten, kann das Sprachmodell gewechselt werden.

Die Entscheidung darüber, welches Sprachmodell für die Spracherkennung eines Anwenders herangezogen wird, erfolgt aufgrund eines in der Spracherkennung auf verschiedenste Weise definierbaren Abstandsmaßes (z. B. auf Basis der spektralen Eigenschaften eines Lautes) für die aktuelle Ausführung im Verhältnis zu den Parametern der hinterlegten Lauteinheiten.

Ein weiterer Vorteil der vorliegenden Erfindung besteht darin, daß die einzelnen Sprachmodelle im Vergleich zu Gesamtsprachmodellen beim Stand der Technik relativ klein gehalten werden können. Ist das richtige Sprachmodell für einen aktuellen Anwender erst einmal ausgewählt, so ist ab diesem Zeitpunkt der Rechenaufwand durch die kleinere Größe des einzelnen Sprachmodells gegenüber einem Gesamtsprachmodell beim Stand der Technik um ein Vielfaches reduziert.

Wird ein sehr zuverlässiges Abstandsmaß für die Auswahl eines Sprachmodelles gewählt, so kann die Anzahl der Sprachmodelle bei gleichem Trainingsmaterial aus einer Trainingsdatenbank erhöht werden, was zu einer weiteren Präzisierung der einzelnen Sprachmodelle führt. Dadurch verkleinert sich das jeweilige Sprachmodell, was wiederum zu einer erhöhten Verarbeitungsgeschwindigkeit führt. Die Sprachmodelle können dabei eine unterschiedliche Größe aufweisen.

Bei der Bildung der Sprachmodelle kann durch Erprobung ein Optimum zwischen Präzisierung und notwendiger bzw. erwünschter Verallgemeinerung der einzelnen Sprachmodelle gefunden werden.

## Patentansprüche

1. Spracherkennungssystem zum sprecherunabhängigen Erkennen und Verarbeiten von Sprachäußerungen eines Anwenders in einer Sprache, mit
einer Verarbeitungsvorrichtung (2) mit einem ersten und einem zweiten phonembasierten Sprachmodell (3a, 3b) zum Erkennen und Verarbeiten der Sprachäußerungen und zur Ausgabe des Ergebnisses der Spracherkennung,
**dadurch gekennzeichnet,**
**daß** die Verarbeitungsvorrichtung (2) die Spracherkennung anhand des ersten (3a) oder des zweiten (3b) Sprachmodelles durchführt, wobei in den jeweiligen Sprachmodellen die Parameter von Lauteinheiten enthalten sind, die jeweils ähnliche Charakteristika aufweisen, und
die Verarbeitungsvorrichtung (2) die Auswahl des Sprachmodelles (3a, 3b) anhand der Sprachcharakteristik einer Sprachäußerung des Anwenders vornimmt, wobei zur Spracherkennung dasjenige Sprachmodell (3a, 3b) ausgewählt wird, das der Sprachcharakteristik der Sprachäußerung des Anwenders am nächsten kommt.

2. Spracherkennungssystem gemäß Anspruch 1, **gekennzeichnet durch**
mehr als zwei Sprachmodelle (3a...3n).

3. Spracherkennungssystem gemäß Anspruch 1 oder 2,
**dadurch gekennzeichnet**,
daß die jeweiligen Sprachmodelle (3a...3n) Bestandteil eines einzigen Gesamtsprachmodelles (3) sind.

4. Spracherkennungssystem gemäß Anspruch 1, 2 oder 3,
**dadurch gekennzeichnet**,
daß im weiteren Verlauf einer Anwendung des Spracherkennungssystems durch einen Anwender das Sprachmodell (3a...3n) gewechselt wird, wenn die Sprachcharakteristik der Sprachäußerungen einem anderen Sprachmodell (3a...3n) näher kommt, als dem aktuell verwendeten.

5. Verfahren zur sprecherunabhängigen Spracherkennung von Sprachäußerungen eines Anwenders in einer Sprache mit den Schritten
Eingabe von Sprachäußerungen,
Erkennen und Verarbeiten der Sprachäußerungen aufgrund eines ersten und eines zweiten phonembasierten Sprachmodelles (3a, 3b) und
Ausgeben des Ergebnisses der Spracherkennung
**dadurch gekennzeichnet**,
daß die Spracherkennung anhand des ersten (3a) oder des zweiten (3b) Sprachmodelles durchgeführt wird, wobei in den jeweiligen Sprachmodellen (3a, 3b) die Parameter von Lauteinheiten enthalten sind, die jeweils ähnliche Charakteristika aufweisen, und
die Auswahl des Sprachmodelles anhand der Sprachcharakteristik einer Sprachäußerung des Anwenders vorgenommen wird, wobei zur Spracherkennung dasjenige Sprachmodell (3a, 3b) ausgewählt wird, das der Sprachcharakteristik der Sprachäußerung des Sprechers am nächsten kommt.

6. Verfahren gemäß Anspruch 5,
**dadurch gekennzeichnet**,
daß in einem Spracherkennungssystem mit mehr als zwei Sprachmodellen (3a...3n) angewendet wird.

7. Verfahren gemäß Anspruch 5 oder 6,
**dadurch gekennzeichnet**,
daß die jeweiligen Sprachmodelle (3a...3n) Bestandteil eines einzigen Gesamtsprachmodelles (3) sind.

8. Verfahren gemäß Anspruch 5, 6 oder 7,
**dadurch gekennzeichnet**,
daß im weiteren Verlauf einer Anwendung des Spracherkennungssystems durch einen Anwender das Sprachmodell (3a...3n) gewechselt wird, wenn die Sprachcharakteristik der Sprachäußerungen einem anderen Sprachmodell (3a...3n) näher kommt, als dem aktuell verwendeten.

9. Vorrichtung (4) zum Erzeugen von Sprachmodellen (3a, 3b) zur sprecherunabhängigen Erkennung von Sprachäußerungen einer Sprache,
**dadurch gekennzeichnet**,
daß die Vorrichtung (4) ein erstes (3a) und ein zweites (3b) Sprachmodell aus einer Datenbank (5), die die Parameter der Lauteinheiten einer Vielzahl von repräsentativen Sprechern enthält, erzeugt, wobei die jeweiligen erzeugten Sprachmodelle (3a, 3b) die Parameter von Lauteinheiten enthalten, die jeweils ähnliche Charakteristika aufweisen.

10. Vorrichtung gemäß Anspruch 9,
**dadurch gekennzeichnet**,
daß mehr als zwei Sprachmodelle (3a...3n) erzeugt werden.

11. Vorrichtung gemäß Anspruch 9 oder 10,
**dadurch gekennzeichnet**,
daß die jeweiligen erzeugten Sprachmodelle (3a...3n) Bestandteil eines Gesamtsprachmodelles (3) sind.

12. Verfahren zum Erzeugen von Sprachmodellen (3a, 3b) zur sprecherunabhängigen Erkennung von Sprachäußerungen einer Sprache,
**mit den Schritten**
Erzeugen von einem ersten (3a) und einem zweiten (3b) Sprachmodell aus einer Datenbank (5), die die Parameter der Lauteinheiten einer Vielzahl von repräsentativen Sprechern enthält, wobei die jeweiligen erzeugten Sprachmodelle (3a, 3b) die Parameter von Lauteinheiten enthalten, die jeweils ähnliche Charakteristika aufweisen.

13. Verfahren gemäß Anspruch 12,
**dadurch gekennzeichnet**,
daß mehr als zwei Sprachmodelle (3a...3n) erzeugt werden.

14. Verfahren gemäß Anspruch 12 oder 13,
**dadurch gekennzeichnet**,
daß die jeweiligen erzeugten Sprachmodelle (3a...3n) Bestandteil eines Gesamtsprachmodelles sind (3).
